# EUROPÄISCHE PATENTANMELDUNG

(11) **EP 1 475 291 A1**
(43) Veröffentlichungstag der Anmeldung: **10.11.2004**
(21) Anmeldenummer: 04090182.9
(22) Anmeldetag: 06.05.2004
(51) Int. Cl.: B61K 9/08, G01B 11/02

(54) **Vorrichtung zum Vermessen von Profilen einer Oberfläche durch Abstandsmessung an einem sich auf der Oberfläche bewegenden Fahrzeug**

(30) Priorität: 08.05.2003 DE 10320422
(71) Anmelder: Dr. Lippstreu Gesellschaft für Mess- und Automatisierungssysteme mbH, 12681 Berlin (DE)
(72) Erfinder: Olaf, Biese, 13403 Berlin (DE)
(74) Vertreter: Sander, Rolf, Dr.

(57) **Zusammenfassung**

Um eine Vorrichtung (1) zum Vermessen von Profilen einer Oberfläche (2) an einer um eine Nulllage zur Oberfläche (2) vibrierenden Befestigung (5) mit einem Abstandmesskopf (7) zum Erzeugen eines dem Abstand des Abstandmesskopfs (7) zur Oberfläche (2) entsprechenden zeitabhängigen Abstandssignals (8), einem starr mit dem Abstandsmesskopf (7) verbundenen Positionsgeber (13, 28), der zum Erzeugen eines von der Vibration der Befestigung (5) abhängigen Vibrationssignals (14, 29) eingerichtet ist, einer Integrationseinheit zum Integrieren der Folge der Vibrationswerte (16, 30) wenigstens einmal nach der Zeit unter Gewinnung eines Positionsänderungssignals (18) und mit einer Subtraktionseinheit (25), die zur Bildung der Differenz zwischen dem Abstandsignal (12) und dem Positionsänderungssignal eingerichtet ist, bereitzustellen, mit der eine genaue örtliche Angabe über die momentane Profiltiefe der zu vermessenden Oberfläche (2) ermöglicht ist, wird vorgeschlagen, dass Filtermittel (19,20;27) zum Unterdrücken von im Vergleich zur Vibration der Befestigung (5) niederfrequenten Messfehlern des Positionsgebers (13,28) vorgesehen sind, wobei die Filtermittel (19,20;27) einen Frequenzfilter (19, 27) aufweisen, dessen Filtercharakteristik auf die Vibration der Befestigung (5) sowie einen Frequenzbereich der Messfehler des Positionsgebers (13,28) abgestimmt ist.

## Beschreibung

Die Erfindung betrifft eine Vorrichtung zum Vermessen von Profilen einer Oberfläche an einer um eine Nulllage zur Oberfläche vibrierenden Befestigung mit einem Abstandmesskopf zum Erzeugen eines dem Abstand der Vorrichtung zur Oberfläche entsprechenden zeitabhängigen Abstandssignals, einer ersten Messwerterfassungseinheit zum Abtasten und Digitalisieren des Abstandsignals unter Erzeugung einer Folge digitaler Abstandswerte, einem starr mit dem Abstandsmesskopf verbundenen Positionsgeber, der zum Erzeugen eines von der Vibration der Befestigung abhängigen Vibrationssignals eingerichtet ist, einer zweiten Messwerterfassungseinheit zum Abtasten und Digitalisieren des Vibrationssignals unter Erzeugung einer Folge digitaler Vibrationswerte, einer der zweiten Messwerterfassungseinheit nachgeordneten Integrationseinheit zum Integrieren der Vibrationswerte wenigstens einmal nach der Zeit unter Gewinnung von Positionsänderungswerten und einer mit der Integrationseinheit und der ersten Messwerterfassungseinheit verbundenen Subtraktionseinheit, die zur Bildung der Differenz zwischen den Abstandswerten und den Positionsänderungswerten eingerichtet ist.

Eine solche Vorrichtung ist aus der DE 100 03 675 C2 bereits bekannt. Die dort offenbarte Vorrichtung ist zum Messen der Fahrflächenrauhigkeit von Schienen vorgesehen und zu diesem Zweck an einem von den Schienen geführten Fahrzeug mittels einer Befestigung gehalten. Ein Abstandsmesskopf ist zur Erzeugung eines Abstandsignals eingerichtet, das mit einem von einem Weggeber erzeugten Wegtakt abtastbar ist. Zum Digitalisieren der abgetasteten Werte dient ein erster Analog-Digitalwandler, so dass eine zeitliche Folge digitaler Abstandswerte erhältlich ist. Die unerwünschten Bewegungen des Abstandmesskopfes in Richtung der Abstandsmessung beispielsweise durch Federungsvorgänge des Fahrzeugs werden durch einen starr mit diesem verbundenen Beschleunigungssensor in Form von Beschleunigungssignalen erfasst, die von einem zweiten Analog-Digital-Wandler mit einem wegunabhängigen Abtasttakt unter Gewinnung einer Folge von Abtastwerten abtastbar sind. Die abgetasteten Werte werden anschließend digitalisiert, so dass eine zeitliche Folge digitaler Beschleunigungswerte bereitgestellt ist. Dem zweiten Analog/Digitalwandler ist ein Integrationsmodul nachgeschaltet, das zum Integrieren der Beschleunigungswerte zweimal nach der Zeit unter Gewinnung von Positionsänderungswerten vorgesehen ist. Eine Auswerteeinheit dient zur Subtraktion der Positionsänderungswerte von den Abstandswerten unter Gewinnung von Differenzwerten, wobei zur Synchronisation ein Nachabtasten der Positionsänderungswerte mit dem Wegtakt erfolgt. Die Differenzwerte sind in ein Fouriertransformationsmodul einspeisbar, das aus einer bestimmten Folge der Differenzwerte Fourierkomponenten bestimmt, aus denen zur Charakterisierung der Rauhigkeit deren Rauhigkeitstiefe und Wellenlänge abgeleitet werden kann. Durch die Differenzbildung zwischen Positionsänderungswerten und Abstandswerten und anschließender Fouriertransformation werden Messwertfehler des Beschleunigungssensors und die Eigenbewegungen des Abstandsmesskopfs kompensiert. Der vorbenannten Vorrichtung haftet jedoch der Nachteil an, dass sie lediglich eine spektrale Aussage in Form von Wellenlängen und Amplituden über die Rauhigkeit der Schienenoberfläche ermöglicht.

Aus dem landläufigen Stand der Technik ist eine Vorrichtung zur mechanischen Vermessung der Oberflächenrauhigkeit von Schienen bekannt. Die zur Vermessung auf eine Schiene aufzusetzende Vorrichtung umfasst eine Führungsschiene, die im Messbetrieb im Wesentlichen parallel zur Schienenoberfläche gehalten ist, sowie einen an der Führungsschiene beweglich geführten Schlitten, von dem sich ein Taststift zur Schienenoberfläche hin erstreckt. Dabei ist der die Schiene abtastende Taststift mit einer Anzeige verbunden. Zur Messung wird der Schlitten vibrationslos entlang der Führungsschiene verfahren, wobei das ortsaufgelöste Schienenprofil an der Anzeige abgelesen werden kann. Die Führungsschiene weist jedoch eine nur begrenzte Länge auf. Eine solche Messung kann daher nicht kontinuierlich durchgeführt werden und ist folglich aufwendig.

Aufgabe der Erfindung ist es, eine Vorrichtung der eingangs genannten Art bereitzustellen, die eine genaue örtliche Angabe über die momentane Profiltiefe der zu vermessenden Oberfläche ermöglicht.

Die Erfindung löst diese Ausgabe dadurch, dass Filtermittel zum Unterdrücken von im Vergleich zur Vibration der Befestigung niederfrequenten Messfehlern des Positionsgebers vorgesehen sind, wobei die Filtermittel einen Frequenzfilter aufweisen, dessen Filtercharakteristik auf die Vibration der Befestigung sowie einen Frequenzbereich der Messfehler des Positionsgebers abgestimmt ist.

Erfindungsgemäß ist eine ortsaufgelöste Messung der Oberflächenprofile von Oberflächen ermöglicht. Dabei sind zur Unterdrückung von Messfehlern des Positionsgebers, die beispielsweise durch Gleichsignalanteile, Hystereseeffekte oder dergleichen entstehen, Filtermittel vorgesehen, die auf die jeweiligen Messbedingungen und den eingesetzten Positionsgeber abgestimmt sind. Die Erfindung beruht auf der Erkenntnis, dass die dem Positionsgeber immanenten Messfehler und die bei der Messung während des Fahrbetriebs auftretenden Schwingungen der Befestigung in unterschiedlichen Frequenzbereichen liegen und durch zweckmäßig abgestimmte Filtermittel voneinander getrennt werden können. Die Vibrationen der Befestigung sind als im Wesentlichen resonante Schwingungen von der Charakteristik der Lagerung der Vorrichtung abhängig, die sich aus der Federung eines sich auf der Oberfläche bewegenden Fahrzeugs sowie aus der Halterung oder der Lagerung der Vorrichtung an dem Fahrzeug zusammensetzt. Schon ab Geschwindigkeiten von 2 km/h des Fahrzeugs bei der Messung liegen diese Vibrationen beispielsweise im Bereich zwischen 30 Hz und 40 Hz. Die durch den Messfehler des Positionsgebers erzeugten Vibrationen sind hingegen von der Bewegungsgeschwindigkeit des Fahrzeugs unabhängig und allein von der Art des gewählten Positionsgebers abhängig. Die Frequenzen der Messfehler typischer Positionsgeber liegen beispielsweise im Bereich zwischen 0,1 Hz und 1 Hz.

Die Befestigung zur Aufnahme der erfindungsgemäßen Vorrichtung ist zweckmäßigerweise an einem Fahrzeug befestigt, welches über Räder verfügt, die auf der zu vermessende Oberfläche abrollen. Abweichend hiervon ist die Befestigung an einem besonderen Traggestell montiert, das beispielsweise mittels eines Kugellagers oder magnetisch an der Oberfläche abgestützt ist. Wesentlich im Sinne der Erfindung ist lediglich, dass eine relative Bewegung der Befestigung bezüglich der zu vermessenden Oberfläche ermöglicht ist, wobei Vibrationen entstehen.

Als Frequenzfilter eignen sich erfindungsgemäß marktübliche digitale Filter.

Der Positionsgeber ist vorteilhafterweise ein Beschleunigungssensor, der zur Erzeugung eines Beschleunigungssignals eingerichtet ist. Solche Beschleunigungssensoren sind als Stand der Technik ebenfalls bekannt, so dass auf deren Funktionsweise und Aufbau hier nicht eingegangen wird. Ist der Positionsgeber ein Beschleunigungssensor, weist die Integrationseinheit zwei Integrationsstufen auf und ist zur Integration des Beschleunigungssignals zweimal nach der Zeit eingerichtet.

Bei einer hiervon abweichenden Ausführung der Erfindung ist der Positionsgeber ein Schwinggeschwindigkeitsmesser, der ein Geschwindigkeitssignal erzeugt. Bei einem solchen Positionsgeber ist eine Integrationseinheit vorgesehen, mit der das Geschwindigkeitssignal einmal nach der Zeit integrierbar ist.

Als Abstandsmesser dient beispielsweise ein marktüblicher Triangulationssensor mit einer Strahlungsquelle, deren elektromagnetische Strahlung durch zweckmäßige Positionierungsmittel zur Oberfläche und insbesondere zu einer Schienenoberfläche lenkbar ist. Im Wege der von der Oberfläche zurückgeworfenen Strahlung ist ein Strahlungsdetektor wie beispielsweise eine CCD-Kamera angeordnet, wobei der Abstandsmesskopf unter Verwendung des Triangulationsprinzips ein Abstandssignal erzeugt, welches dem Abstand des Abstandsmesskopfs zur Oberfläche entspricht.

Vorteilhafterweise ist die Integrationseinheit mittels der Filtermittel mit der Subtraktionseinheit verbunden. Mit anderen Worten sind die Filtermittel zwischen der Integrationseinheit und der Subtraktionseinheit angeordnet. Auf diese Weise können auch durch die Integrationseinheit verstärkte oder erst verursachte Messwertverarbeitungsfehler unterdrückt werden, die hinsichtlich ihres Frequenzbereichs denjenigen des Positionsgebers entsprechen.

Bei einer bevorzugten Weiterentwicklung der Erfindung ist der Frequenzfilter ein Tiefpassfilter mit einer Tiefpasscharakteristik zum Erzeugen von Korrekturwerten, wobei die Filtermittel eine Filtersubtraktionseinheit aufweisen, die zur Subtraktion der Korrekturwerte von den Positionsänderungswerten eingerichtet ist. Gemäß dieser Weiterentwicklung der Erfindung werden beispielsweise die Positionsänderungswerte sowohl dem Tiefpassfilter als auch der Subtraktionseinheit zugeführt. Der Frequenzfilter ist zum Durchlass der sich zeitlich langsam ändernden Messwertfehler eingerichtet. Hierbei kann es sich beispielsweise um einen besonders einfachen Mittelwertfilter handeln, der aus einer bestimmten Anzahl aufeinander folgender Positionsänderungswerte deren Mittelwert bestimmt. Der so ermittelte Mittelwert entspricht dann im Wesentlichen dem sich nur langsam ändernden Messfehler des Positionsgebers als Korrekturwert. Die Korrekturwerte werden anschließend der Subtraktionseinheit zugeführt, so dass durch die Subtraktion der Korrekturwerte von den Positionsänderungswerten der Messfehler des Positionsgebers nahezu vollständig unterdrückt ist.

Die den Tiefpassfilter und die Filtersubtraktionseinheit aufweisenden Filtermittel können erfindungsgemäß jedoch auch nach einer ersten Integrationsstufe der Integrationseinheit angeordnet sein, wobei der Positionsgeber ein Beschleunigungssensor ist.

Bei einer hiervon abweichend Ausgestaltung der Erfindung ist der Frequenzfilter ein Hochpassfilter mit einer Hochpasscharakteristik, der zum Herausfiltern der niederfrequenten Messfehler eingerichtet ist. Bei dieser Weiterentwicklung der Erfindung kann auf das Vorsehen einer zusätzlichen Filtersubtraktionseinheit verzichtet werden. Allerdings sind die Anforderungen an den zu verwendenden Hochpassfilter im Vergleich zum Tiefpassfilter erhöht. Insbesondere können durch den Hochpassfilter verursachte Phasenfehler die Messgenauigkeit der Vorrichtung herabsetzen.

Gemäß einer weiteren Ausgestaltung der Erfindung ist der Frequenzfilter ein der Subtraktionseinheit nachgeordneter Hochpassfilter mit einer Hochpasscharakteristik, der zum Herausfiltern der niederfrequenten Messfehler eingerichtet ist. Auch bei dieser Ausführungsform der Erfindung kann auf das Vorsehen einer zusätzlichen Filtersubtraktionseinheit verzichtet werden. Der Hochpassfilter gemäß dieser Ausführungsform der Erfindung muss jedoch auch bei niedrigen Geschwindigkeiten des sich auf der Oberfläche bewegenden Fahrzeugs, bei denen der Frequenzbereich der Vibrationen und damit der Positionsänderungswerte entsprechend tief liegt, sehr steilflankig sein, da auch die zeitliche Folge der Abstandswerte durch den Hochpassfilter geführt wird. Die Steilflankigkeit kann jedoch zu starken Verzerrungen bei den durchgelassenen korrigierten Positionsänderungswerten führen. Bei hohen Geschwindigkeiten des Fahrzeugs werden Frequenzen nahe der Eckfrequenz des Hochpassfilters hingegen vermieden.

Weiterhin kann es zweckmäßig sein, wenn die Integrationseinheit mittels einer Phasenkorrektureinheit mit der Subtraktionseinheit verbunden ist. Mit anderen Worten ist zwischen der Integrationseinheit und der Subtraktionseinheit eine Phasenkorrektureinheit vorgesehen. Dabei kann die Phasenkorrektureinheit der Integrationseinheit in der Verarbeitungskette unmittelbar folgen, oder aber den Filtermitteln nachgeordnet sein. Die Phasenkorrektureinheit ist zur Kompensation von Phasenverschiebungen vorgesehen, die beispielsweise durch die Filtermittel und insbesondere durch einen Hochpassfilter erzeugt werden können.

Zweckmäßigerweise ist sowohl ein mit der ersten Messwerterfassungseinheit als auch mit der zweiten Messwerterfassungseinheit verbundener Taktgeber zur Erzeugung eines synchronen Abtasttaktes vorgesehen. Der Einsatz eines einzigen Taktgebers für beide Messwerterfassungseinheiten verringert den technischen Aufwand zur Erzeugung eines synchronen Abtasttaktes.

Weitere Ausgestaltungen und Vorteile der Erfindung sind Gegenstand der nachfolgenden Beschreibung von Ausführungsbeispielen unter Bezug auf die Figuren der Zeichnung, wobei gleiche Bezugszeichen auf gleich wirkende Bauteile verweisen und wobei
- Figur 1: ein Ausführungsbeispiel der erfindungsgemäßen Vorrichtung in einer Seitenansicht zeigt, die an einem schienengeführten Fahrzeug befestigt ist,
- Figur 2: ein Ausführungsbeispiel der Vorrichtung gemäß Figur 1 in einer schematischen Ansicht zeigt,
- Figur 3: ein weiteres Ausführungsbeispiel der Vorrichtung gemäß Figur 1 einer schematischen Ansicht zeigt und
- Figur 4: ein weiteres Ausführungsbeispiel der Vorrichtung gemäß Figur 1 einer schematischen Ansicht zeigt.

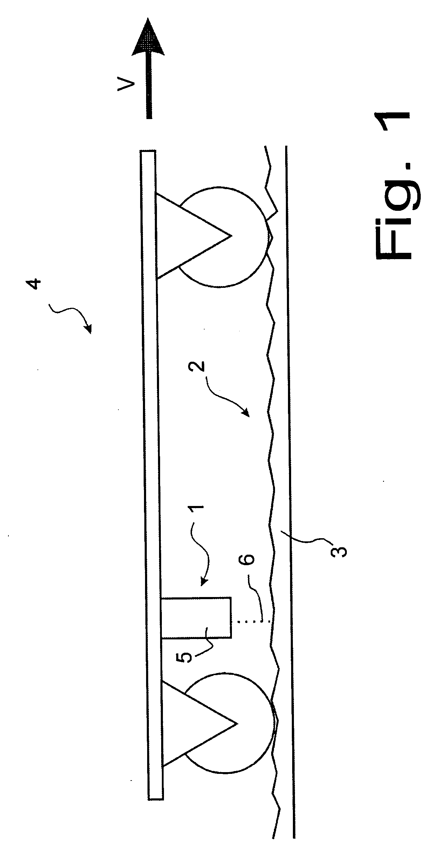

Figur 1 zeigt ein Ausführungsbeispiel der erfindungsgemäßen Vorrichtung 1 in einer schematischen Seitenansicht. Die zum Vermessen des Profils einer Oberfläche 2 einer Schiene 3 vorgesehene Vorrichtung 1 ist an einem von der Schiene 3 geführten Fahrzeug 4 befestigt, das sich auf der Schiene 3 mit der Geschwindigkeit v in die durch den Pfeil angedeutete Richtung bewegt. Zur Befestigung der Vorrichtung 1 an dem Fahrzeug 4 dient eine kastenförmige Befestigung 5, die starr mit der Vorrichtung 1 verbunden und schwingungsgedämpft an dem Fahrzeug 4 gelagert ist.

Die Vorrichtung 1 umfasst einen in Figur 1 nicht dargestellten Abstandsmesskopf mit einem Laser als Strahlungsquelle, dessen Laserstrahl 6 durch zweckmäßige Justagemittel auf die Oberfläche 2 der Schiene 3 gelenkt ist. Im Wege der von der Schiene 3 zurückgeworfenen Laserstrahlung ist eine ebenfalls nicht dargestellte CCD-Kamera als Strahlungsdetektor mit einer Auswerteeinheit angeordnet, die nach dem Triangulationsprinzip ein zeitabhängiges Abstandssignal erzeugt. Das Abstandsignal entspricht dem Abstand des Abstandsmesskopfs zur Oberfläche 2.

Das Fahrzeug 4 wird in dem gezeigten Ausführungsbeispiel mit einer Geschwindigkeit von 5 km/h über die Schiene 3 bewegt, so dass Fahrzeugvibrationen entstehen, die auf die Befestigung 5 und somit auf die Vorrichtung 1 übertragen werden. Der Abstandsmesskopf der Vorrichtung 1 schwingt somit um eine Nulllage, wobei die Frequenzen dieser Schwingungen sowohl von der Kennlinie Lagerung des Fahrzeugs 4 als auch von der Kennlinie der Lagerung der Befestigung 5 an dem Fahrzeug 4 im Wesentlichen bestimmt sind. Die durch die Schwingungen oder Vibrationen hervorgerufenen ungewünschten Positionsänderungen des Abstandssensors überlagern dessen Abstandsignal und müssen daher bei der Auswertung des Abstandsignals unterdrückt werden.

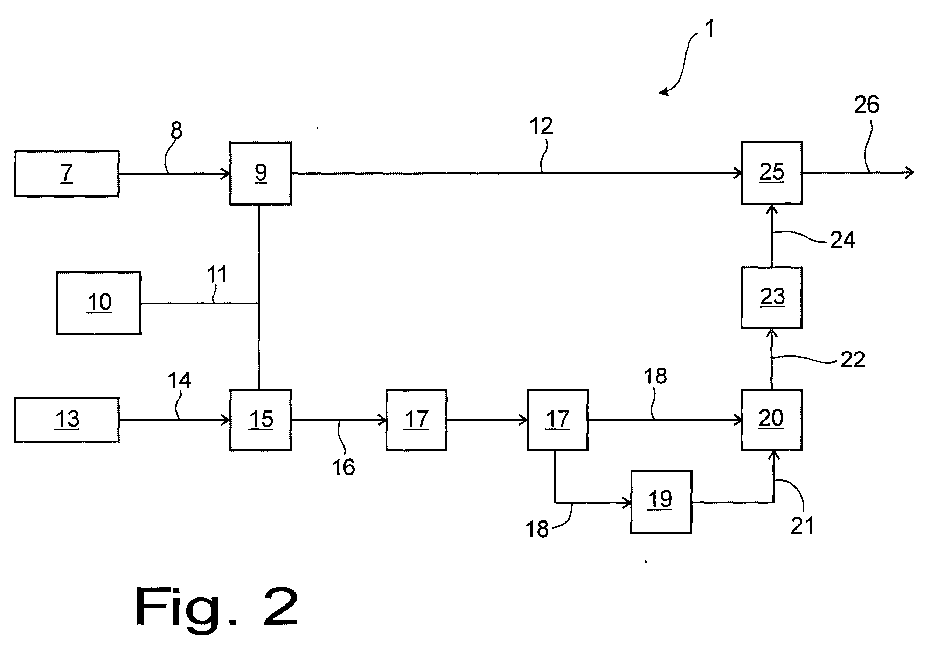

Figur 2 zeigt ein Ausführungsbeispiel der erfindungsgemäßen Vorrichtung 1 in einer genaueren schematischen Darstellung. Die Vorrichtung 1 umfasst einen Abstandsmesskopf 7, der zum Erzeugen eines Abstandsignals 8 nach dem zuvor beschriebenen Triangulationsprinzip eingerichtet ist. Der Abstandmesskopf 7 ist mit einer ersten Messwerterfassungseinheit 9 verbunden, die das Abstandssignal 8 mit einem von einem Taktgeber 10 erzeugten Abtasttakt 11 abtastet und die abgetasteten Werte mittels eines Analog/Digitalwandlers unter Gewinnung einer zeitlichen Folge digitaler Abstandswerte 12 digitalisiert.

Zum Erfassen der unerwünschten Eigenbewegung des Abstandsmesskopfs 7 ist ein starr mit diesem verbundener Beschleunigungssensor 13 vorgesehen, dessen analoges zeitabhängiges Beschleunigungssignal 14 als Vibrationssignal an eine zweite Messwerterfassungseinheit 15 geschaltet ist. Die zweite Messwerterfassungseinheit 15 ist ebenfalls mit dem Taktgeber 10 verbunden, so dass das Beschleunigungssignal 14 mittels der zweiten Messwerterfassungseinheit 15 synchron zum Abstandsignal 8 abtastbar ist. Die abgetasteten Werte werden von einem Analog/Digitalwandler der zweiten Messwerterfassungseinheit 15 unter Gewinnung einer zeitlichen Folge digitaler Beschleunigungswerte 16 digitalisiert.

Der zweiten Messwerterfassungseinheit 15 ist eine aus zwei Integrationsstufen 17 zusammengesetzte Integrationseinheit nachgeordnet, die zum Integrieren der Beschleunigungswerte zweimal nach der Zeit eingerichtet ist, wodurch Positionsänderungswerte 18 erzeugbar sind.

Der Beschleunigungssensor 13 weist auf Grund von Gleichsignalanteilen, Hystereseeffekten und dergleichen dem Bauteil immanente Messfehler auf, wodurch im Vergleich zu den Frequenzen der Vibrationen der Befestigung 5 niederfrequente Schwankungen des Beschleunigungssignals 16 erzeugt werden. Diese Schwankungen werden durch die Integrationsstufen 17 verstärkt. Zum Unterdrücken dieser Messfehler des Beschleunigungssensors 13 sind Filtermittel vorgesehen die in dem in Figur 2 gezeigten Ausführungsbeispiel einen Tiefpassfilter 19 mit Tiefpasscharakteristik sowie eine Filtersubtraktionseinheit 20 umfassen. Das digitale Tiefpassfilter 19 ist der Integrationseinheit nachgeschaltet und weist eine solche Filtercharakteristik auf, dass nur die niederfrequenten Anteile der Positionsänderungswerte das Tiefpassfilter als Korrekturwerte 21 passieren, während die diesbezüglich höherfrequenten Anteile unterdrückt werden. Die Filtersubtraktionseinheit ist zum Subtrahieren der Korrekturwerte 21 von den Positionsänderungswerten 18 eingerichtet und zu diesem Zweck sowohl mit dem in der Bearbeitungskette letzten Integrationsmodul 17 der Integrationseinheit als auch mit dem Tiefpassfilter 19 verbunden. Auf diese Weise sind korrigierte Positionsänderungswerte 22 erhältlich, die von den Messwertfehlern des Beschleunigungssensors 13 im Wesentlichen bereinigt sind.

Die korrigierten Positionsänderungswerte 22 sind einer Phasenkorrektureinheit 23 zuführbar, die zum Erzeugen einer Phasenanpassung eingerichtet ist, wodurch gegebenenfalls vorliegende Phasenverschiebungen beseitigt und die korrigierten Positionsänderungswerte mit den Abstandswerten 12 synchronisierbar sind. Als Phasenkorrektureinheit 23 ist beispielsweise ein marktüblicher Allpassfilter verwendbar.

Von der Phasenkorrektureinheit 23 synchronisierte und korrigierte Positionsänderungswerte 24 sind einer Subtraktionseinheit 25 zuführbar, die mit der ersten Messwerterfassungseinheit 9 verbunden und zum Subtrahieren der synchronisierten und korrigierten Positionsänderungswerte 24 von den Abstandswerten 12 eingerichtet ist, wodurch korrigierte Abstandsignale 26 erhältlich sind. Die korrigierten Abstandsignale 26 können einer figürlich nicht dargestellten Auswerteeinheit, beispielsweise einem Rechner, zugeführt werden, welcher zum Darstellen und Verarbeiten der empfangenen korrigierten Abstandswerte 26 eingerichtet ist.

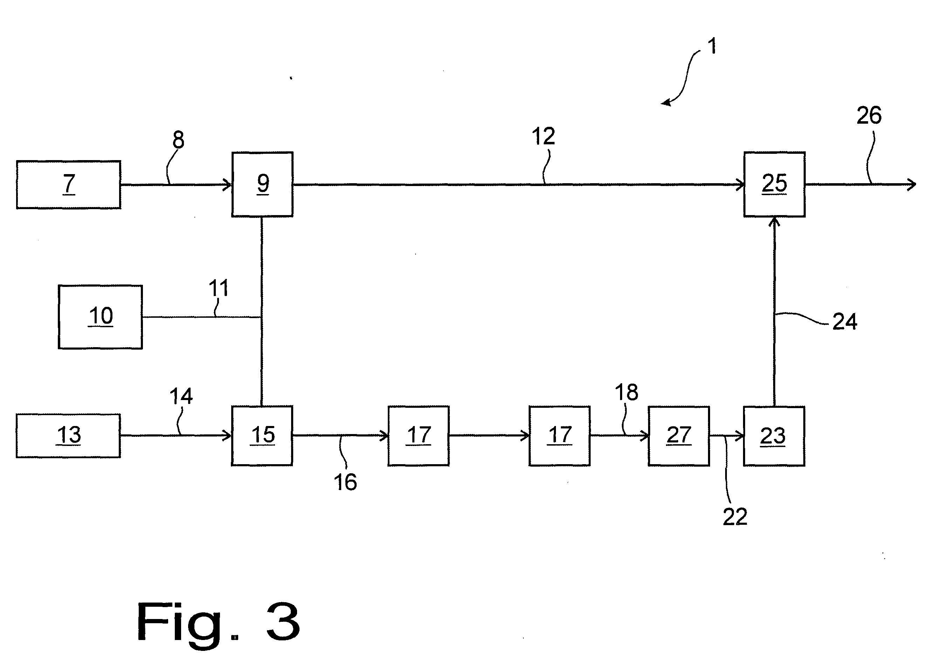

Figur 3 zeigt ein weiteres Ausführungsbeispiel der erfindungsgemäßen Vorrichtung 1, das sich gegenüber dem in Figur 2 gezeigten Ausführungsbeispiel lediglich hinsichtlich der Filtermittel unterscheidet, die hier einen Hochpassfilter 27 aufweisen. Der Hochpassfilter 27 ist unmittelbar mit der Integrationseinheit verbunden und weist eine solche Filtercharakteristik auf, dass die niederfrequenten Messwertefehler des Beschleunigungssensors 13 unterdrückt, die höherfrequenten durch Vibrationen der Befestigung 5 hervorgerufenen Anteile der Positionsänderungswerte 18 jedoch hindurchgelassen werden. Die mittels des Hochpassfilters 27 erzeugten korrigierten Positionsänderungswerte 22 sind der Phasenkorrektureinheit 23 zuführbar, welche die mit den Abstandswerten 12 synchronisierten korrigierten Positionsänderungswerte 24 bereitstellt.

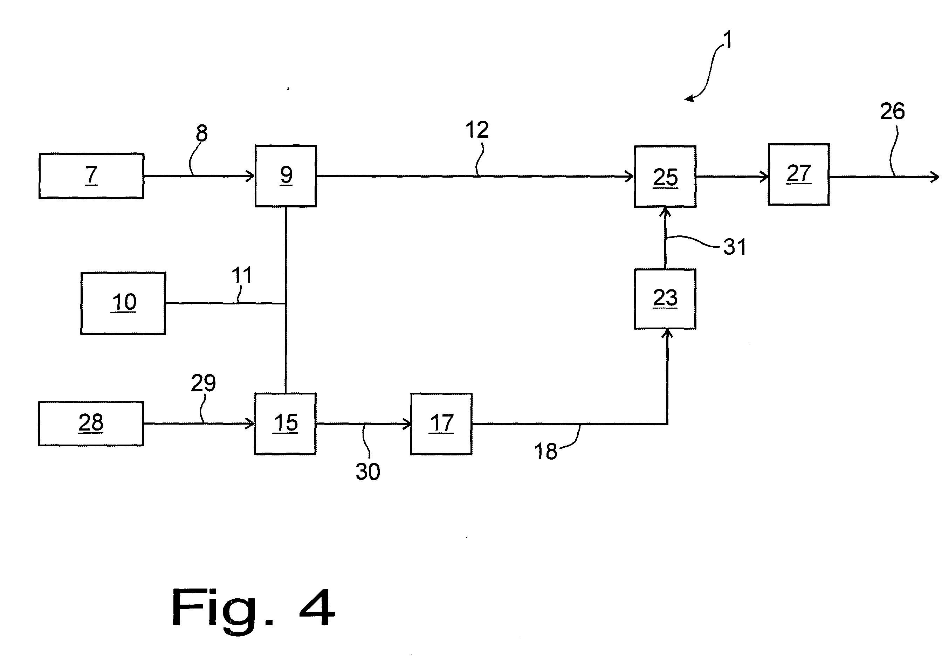

Figur 4 zeigt ein weiteres Ausführungsbeispiel der erfindungsgemäßen Vorrichtung 1. Die hier gezeigte Vorrichtung 1 weist als Positionsgeber ein Schwinggeschwindigkeitsmesser 28 auf, der zur Erzeugung eines Geschwindigkeitssignals 29 eingerichtet ist. Die von der zweiten Messwerterfassungseinheit 15 erzeugbare Folge digitaler Geschwindigkeitswerte 30 ist der Integrationseinheit zuführbar, die lediglich eine Integrationsstufe 17 aufweist, welche die Geschwindigkeitswerte 30 unter Gewinnung der Positionsänderungswerte 18 einmal nach der Zeit integriert.

Die Integrationseinheit ist gemäß dem in Figur 4 verdeutlichten Ausführungsbeispiel nicht mittels der Filtermittel mit der Subtraktionseinheit 25 verbunden. Vielmehr ist der Hochpassfilter 27 der Subtraktionseinheit 25 nachgeschaltet, so dass die Messfehler des Schwinggeschwindigkeitsmessers 28 erst nach der Subtraktion synchronisierter Positionsänderungswerte 31 von den Abstandswerten 12 unterdrückbar sind.

## Patentansprüche

1. Vorrichtung (1) zum Vermessen von Profilen einer Oberfläche (2) an einer um eine Nulllage zur Oberfläche (2) vibrierenden Befestigung (5) mit einem Abstandmesskopf (7) zum Erzeugen eines dem Abstand des Abstandmesskopfs (7) zur Oberfläche (2) entsprechenden zeitabhängigen Abstandssignals (8), einer ersten Messwerterfassungseinheit (9) zum Abtasten und Digitalisieren des Abstandsignals (8) unter Erzeugung einer Folge digitaler Abstandswerte (12), einem starr mit dem Abstandsmesskopf (7) verbundenen Positionsgeber (13, 28), der zum Erzeugen eines von der Vibration der Befestigung (5) abhängigen Vibrationssignals (14, 29) eingerichtet ist, einer zweiten Messwerterfassungseinheit (15) zum Abtasten und Digitalisieren des Vibrationssignals (14, 29) unter Erzeugung einer Folge digitaler Vibrationswerte (16, 30), einer der zweiten Messwerterfassungseinheit (15) nachgeordneten Integrationseinheit zum Integrieren der Vibrationswerte (16, 30) wenigstens einmal nach der Zeit unter Gewinnung von Positionsänderungswerten (18) und einer mit der Integrationseinheit und der ersten Messwerterfassungseinheit (9) verbundenen Subtraktionseinheit (25), die zur Bildung der Differenz zwischen den Abstandswerten (12) und den Positionsänderungswerten eingerichtet ist, **dadurch gekennzeichnet, dass** Filtermittel (19,20;27) zum Unterdrücken von im Vergleich zur Vibration der Befestigung (5) niederfrequenten Messfehlern des Positionsgebers (13,28) vorgesehen sind, wobei die Filtermittel (19,20;27) einen Frequenzfilter (19, 27) aufweisen, dessen Filtercharakteristik auf die Vibration der Befestigung (5) sowie einen Frequenzbereich der Messfehler des Positionsgebers (13,28) abgestimmt ist.

2. Vorrichtung (1) nach Anspruch 1, **dadurch gekennzeichnet, dass** die Integrationseinheit mittels der Filtermittel (19,20;27) mit der Subtraktionseinheit (25) verbunden ist.

3. Vorrichtung nach Anspruch 1 oder 2, **dadurch gekennzeichnet, dass** der Frequenzfilter ein Tiefpassfilter (19) mit einer Tiefpasscharakteristik zum Erzeugen von Korrekturwerten (21) ist, wobei die Filtermittel eine Filtersubtraktionseinheit (20) aufweisen, die zur Subtraktion der Korrekturwerte (21) von den Positionsänderungswerten (18) eingerichtet ist.

4. Vorrichtung nach Anspruch 1 oder 2, **dadurch gekennzeichnet, dass** der Frequenzfilter ein Hochpassfilter (27) mit einer Hochpasscharakteristik ist, der zum Herausfiltern der niederfrequenten Messfehler eingerichtet ist.

5. Vorrichtung nach Anspruch 1, **dadurch gekennzeichnet, dass** der Frequenzfilter ein der Subtraktionseinheit (25) nachgeordneter Hochpassfilter (27) mit einer Hochpasscharakteristik ist, der zum Herausfiltern der niederfrequenten Messfehler eingerichtet ist.

6. Vorrichtung nach einem der vorhergehenden Ansprüche, **dadurch gekennzeichnet, dass** die Integrationseinheit mittels einer Phasenkorrektureinheit (23) mit der Subtraktionseinheit (25) verbunden ist.

7. Vorrichtung nach einem der vorhergehenden Ansprüche, **gekennzeichnet durch** einen sowohl mit der ersten Messwerterfassungseinheit (9) als auch mit der zweiten Messwerterfassungseinheit (15) verbundenen Taktgeber (10) zur Erzeugung eines synchronen Abtasttaktes (11).
